# EUROPEAN PATENT APPLICATION

(11) **EP 4 678 377 A1**
(43) Date of publication of application: **14.01.2026**
(21) Application number: 23933104.4
(22) Date of filing: 16.11.2023
(51) Int. Cl.: B29C 55/20, B29C 55/16

(54) **LINK MECHANISM AND DRAWING MACHINE**

(30) Priority: 14.04.2023 JP 2023066614
(71) Applicant: The Japan Steel Works, Ltd., Tokyo 141-0032 (JP)
(72) Inventor: KATO, Masaki, Tokyo 141-0032 (JP); NAKAJIMA, Ichiro, Tokyo 141-0032 (JP)
(74) Representative: Simmons & Simmons LLP (Munich)
(86) International application number: PCT/JP2023/041373
(87) International publication number: WO 2024/214330

(57) **Abstract**

A link mechanism according to one embodiment includes a rail holder 31. The rail holder 31 includes a roller holding portion 40, guide rollers 60 each provided with an opening 63 in an upper surface and configured to move along a rail 14 while rotating, roller shafts 51 and 52 each having one end side fixed to the roller holding portion 40 and the other end side inserted into the guide roller 60 through the opening 63, and bearings 53 and 54 provided inside the guide rollers 60 and configured to rotatably support the guide rollers 60 with respect to the roller shafts 51 and 52. Further, the opening 63 of the guide roller 60 is entirely covered by the roller holding portion 40.

## Description

### TECHNICAL FIELD

The present invention relates to a link mechanism and a stretching machine.

### BACKGROUND ART

A stretching machine configured to stretch a thin film (for example, resin sheet or resin film) in a longitudinal direction and a transverse direction while conveying it has been known. Patent Document 1 discloses a simultaneous biaxial stretching machine in which longitudinal stretching and transverse stretching of a sheet-like material are performed. The simultaneous biaxial stretching machine disclosed in Patent Document 1 includes endless link devices. The endless link device is made up of rails and a plurality of equal-length link units moving along the rails, and each equal-length link unit includes rollers moving on the rails while rotating.

### RELATED ART DOCUMENTS

### PATENT DOCUMENTS

Patent Document 1: Japanese Patent No. 4379306

### SUMMARY OF THE INVENTION

### PROBLEMS TO BE SOLVED BY THE INVENTION

In order to extend the maintenance intervals and reduce the maintenance frequency for stretching machines, it is desirable to extend the service life of bearings used in a link mechanism.

Other objects and novel features will be apparent from the description of this specification and the accompanying drawings.

### MEANS FOR SOLVING THE PROBLEMS

According to one embodiment, a link mechanism includes a pair of rail holders, and each of the rail holders includes a roller holding portion, a guide roller provided with an opening in an upper surface facing the roller holding portion and configured to move along a rail while rotating, a shaft having one end side fixed to the roller holding portion and the other end side inserted into the guide roller through the opening, and a bearing provided inside the guide roller and configured to rotatably support the guide roller with respect to the shaft. Further, the opening of the guide roller is entirely covered by the roller holding portion.

### EFFECTS OF THE INVENTION

According to one embodiment, it is possible to extend the service life of bearings used in a link mechanism.

### BRIEF DESCRIPTIONS OF THE DRAWINGS

[FIG. 1] is a schematic view showing a configuration of a thin-film manufacturing system according to one embodiment.
[FIG. 2] is a schematic view showing a configuration of a stretching machine according to one embodiment.
[FIG. 3] is another schematic view showing the configuration of the stretching machine according to one embodiment.
[FIG. 4A] is a plan view schematically showing part of link mechanisms and rails according to one embodiment.
[FIG. 4B] is another plan view schematically showing part of the link mechanisms and the rails according to one embodiment.
[FIG. 5] is a perspective view of a link mechanism according to one embodiment.
[FIG. 6] is a cross-sectional view of the link mechanism according to one embodiment.
[FIG. 7] is an enlarged cross-sectional view showing guide rollers provided in an outer rail holder and a structure around the guide rollers according to one embodiment.
[FIG. 8A] is a plan view of a cover member according to one embodiment.
[FIG. 8B] is a cross-sectional view of the cover member according to one embodiment.
[FIG. 8C] is a bottom view of the cover member according to one embodiment.
[FIG. 9] is an exploded perspective view showing a mounted state of the cover member according to one embodiment.
[FIG. 10] is a plan view of a rail holder according to one embodiment.
[FIG. 11] is a plan view showing a plurality of link mechanisms when a link pitch is at its minimum in one embodiment.
[FIG. 12] is an enlarged cross-sectional view showing guide rollers provided in a rail holder and a structure around the guide rollers according to another embodiment.
[FIG. 13] is an exploded perspective view showing a mounted state of a cover member according to another embodiment.
[FIG. 14] is an enlarged cross-sectional view showing guide rollers provided in a rail holder and a structure around the guide rollers according to another embodiment.
[FIG. 15] is an exploded perspective view showing a mounted state of a cover member according to another embodiment.
[FIG. 16] is an enlarged cross-sectional view showing guide rollers provided in a rail holder and a structure around the guide rollers according to another embodiment.
[FIG. 17] is an exploded perspective view showing a mounted state of a cover member according to another embodiment.

### DETAILED DESCRIPTION OF PREFERRED EMBODIMENTS

Hereinafter, one embodiment will be described in detail with reference to the drawings. Note that the devices and members having the same or substantially the same function are denoted by the same reference characters throughout the drawings referenced for describing the embodiment. Also, the descriptions for the devices and members that have been once described will not be repeated in principle.

### (First Embodiment)

### <Configuration of Thin-Film Manufacturing System>

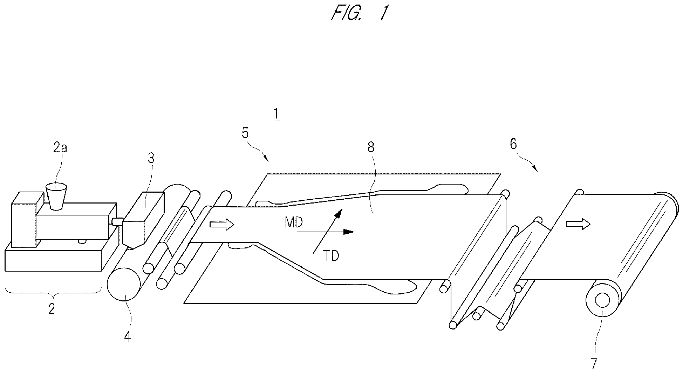

FIG. 1 is a schematic view showing a configuration of a thin-film manufacturing system 1 according to this embodiment. The thin-film manufacturing system 1 includes an extrusion apparatus (extruder, kneading extruder) 2, a T-die 3, a raw sheet cooling apparatus 4, a stretching machine 5, a take-off apparatus 6, and a winder apparatus 7.

In the thin-film manufacturing system 1 according to this embodiment, a resin film is manufactured through the following process. First, a raw material is supplied to the extrusion apparatus 2. More specifically, a resin material (for example, thermoplastic resin material in pellet shape) is supplied to a material supply unit (material supply port, hopper) 2a of the extrusion apparatus 2.

The raw material supplied to the extrusion apparatus 2 is conveyed while being kneaded (mixed). More specifically, the raw material supplied to the extrusion apparatus 2 is melted and kneaded while being sent forward by the rotation of screws in the extrusion apparatus 2.

The raw material kneaded by the extrusion apparatus 2 (kneaded material) is fed to the T-die 3. The kneaded material fed to the T-die 3 passes through the T-die 3 and is extruded toward the raw sheet cooling apparatus 4 through a slit of the T-die 3. The kneaded material is formed into a desired shape (in this case, film-like shape) by passing through the T-die 3.

The kneaded material is continuously extruded from the T-die 3 toward the raw sheet cooling apparatus 4. The kneaded material extruded from the T-die 3 is cooled in the raw sheet cooling apparatus 4 to be a resin film 8. Then, the resin film 8 is supplied to the stretching machine 5.

The resin film 8 supplied to the stretching machine 5 is stretched in an MD direction and a TD direction by the stretching machine 5. The resin film 8 subjected to a stretching process (stretching treatment) by the stretching machine 5 is conveyed to the winder apparatus 7 via the take-off apparatus 6 and is wound by the winder apparatus 7. The resin film 8 wound by the winder apparatus 7 is cut as needed.

The thin-film manufacturing system 1 manufactures the resin film 8 through the process described above. Understandably, the thin-film manufacturing system 1 can be modified in various ways in accordance with the properties and the like of the resin film to be manufactured. For example, an extraction tank may be installed near the take-off apparatus 6 shown in FIG. 1, and a plasticizer (for example, paraffin) contained in the resin film 8 may be removed in another embodiment.

The stretching machine 5 constituting the thin-film manufacturing system 1 stretches the resin film 8 in the MD direction and the TD direction while conveying the resin film 8 in the MD direction. In other words, the MD (Machine Direction) direction is a conveying direction of the resin film 8. Also, the TD (Transverse Direction) direction is a direction that intersects the conveying direction of the resin film 8. Thus, in the following description, the MD direction is referred to as a "conveying direction" or a "longitudinal direction", and the TD direction is referred to as a "transverse direction" in some cases.

The MD direction (conveying direction, longitudinal direction) and the TD direction (transverse direction) are the directions intersecting each other, and are more specifically the directions orthogonal to each other. Namely, the stretching machine 5 is a stretching machine capable of simultaneously stretching the resin film 8 in two directions intersecting each other while conveying the resin film 8, and is referred to as a "simultaneous biaxial stretching machine" in general.

### <Stretching Machine>

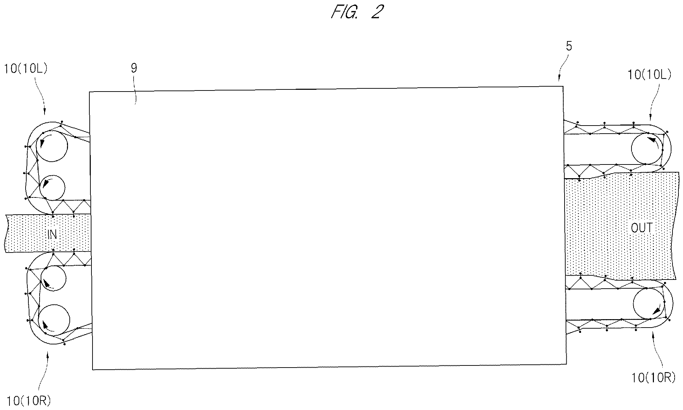

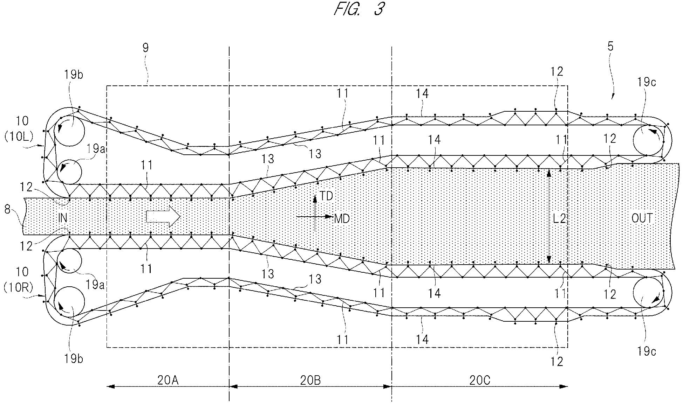

Next, the stretching machine 5 will be described in more detail. FIG. 2 and FIG. 3 are schematic views showing the configuration of the stretching machine 5 according to this embodiment. The stretching machine 5 has a pair of link devices 10. The pair of link devices 10 are spaced apart from each other in plan view. In the following description, one of the pair of link devices 10 is referred to as a "link device 10R" and the other of the pair of link devices 10 is referred to as a "link device 10L" for distinction in some cases. Understandably, such a distinction is merely for convenience of description.

In FIG. 2 and FIG. 3, the link device 10R is disposed on a right side (R side) with respect to the conveying direction (MD direction), and the link device 10L is disposed on a left side (L side) with respect to the conveying direction (MD direction). Further, the link device 10R and the link device 10L are spaced apart from each other in the TD direction and face each other with the resin film 8 interposed therebetween.

The resin film 8 is conveyed through the space between the link device 10R and the link device 10L in the MD direction. From another perspective, the space between the link device 10R and the link device 10L facing each other is used as a conveyance path for conveying the resin film 8.

Referring to FIG. 3, the stretching machine 5 is divided into three regions 20A, 20B, and 20C along the conveying direction (MD direction). The region 20A serves as a preheating region (preheat zone), the region 20B serves as a stretching region, and the region 20C serves as a heat setting region. The preheating region 20A, the stretching region 20B, and the heat setting region 20C are arranged in this order in the conveying direction (MD direction).

A portion indicated by "IN" in FIG. 2 and FIG. 3 is an inlet of the resin film 8 in the stretching machine 5, and is located in the preheating region 20A. Also, a portion indicated by "OUT" in FIG. 2 and FIG. 3 is an outlet of the resin film 8 in the stretching machine 5, and is located in the heat setting region 20C. Further, the stretching region 20B in which the stretching process is performed is located between the preheating region 20A in which the inlet of the resin film 8 is present and the heat setting region 20C in which the outlet of the resin film 8 is present.

A heat treatment unit 9 covers a part of the preheating region 20A, all of the stretching region 20B, and a part of the heat setting region 20C. Also, the heat treatment unit 9 covers the central parts of the link devices 10R and 10L, and heats the resin film 8 conveyed by the link devices 10R and 10L. The heat treatment unit 9 in this embodiment is composed of an oven capable of heating the resin film 8 to a desired temperature. The resin film 8 passes through the inside of the oven as the heat treatment unit 9 while being gripped by the link devices 10R and 10L.

### <Link Device>

Each of the link devices 10R and 10L includes a plurality of link mechanisms 11 coupled to constitute endless chains, and each of the link mechanisms 11 is provided with a clip 12 configured to grip the resin film 8. The resin film 8 is held by the clips 12 of the link mechanisms 11 constituting the link device 10R and the clips 12 of the link mechanisms 11 constituting the link device 10L. Specifically, one side (right side/R side) of the resin film 8 is gripped by the plurality of clips 12 in the link device 10R, and the other side (left side/L side) of the resin film 8 is gripped by the plurality of clips 12 in the link device 10L.

Each of the link devices 10R and 10L includes a pair of rails 13 and 14 disposed on a support base (bed) in addition to the plurality of link mechanisms 11. The rail 13 of each of the link devices 10R and 10L is disposed on an inner side of the rail 14 of each of the link devices 10R and 10L. In other words, the rail 14 of each of the link devices 10R and 10L is disposed on an outer side of the rail 13 of each of the link devices 10R and 10L.

Thus, the rail 13 is referred to as an "inner rail", and the rail 14 is referred to as an "outer rail" in some cases. Furthermore, the rail 13 is referred to also as a "reference rail" or an "SP rail", and the rail 14 is referred to also as an "MD rail" in some cases.

The rails 13 and 14 provided in each of the link devices 10R and 10L are made up of a plurality of partial rails coupled to each other, and are annularly disposed over the preheating region 20A, the stretching region 20B, and the heat setting region 20C. More specifically, the rails 13 and 14 form an annular travel path by being turned back in the preheating region 20A where the inlet of the resin film 8 is present and in the heat setting region 20C where the outlet of the resin film 8 is present.

Three sprockets 19a, 19b, and 19c are provided on the inner side of the rail 13 of the link device 10R. Similarly, three sprockets 19a, 19b, and 19c are provided on the inner side of the rail 13 of the link device 10L.

The sprockets 19a and 19b of each of the link devices 10R and 10L are disposed in the preheating region 20A, and the sprocket 19c of each of the link devices 10R and 10L is disposed in the heat setting region 20C. Understandably, the sprockets 19a and 19b are disposed outside the heat treatment unit 9 that covers a part of the preheating region 20A. Further, the sprockets 19c are disposed outside the heat treatment unit 9 that covers a part of the heat setting region 20C. In other words, the sprockets 19a, 19b, and 19c of each of the link devices 10R and 10L are disposed outside the oven.

The plurality of link mechanisms 11 in the link devices 10R and 10L are disposed on the rails 13 and 14 and move along the rails 13 and 14. In other words, the link mechanisms 11 run on the rails 13 and 14.

More specifically, when the sprockets 19a, 19b, and 19c of the link device 10R rotate, a driving force acts on the plurality of link mechanisms 11 of the link device 10R, and these link mechanisms 11 move (run) on the rails 13 and 14. Further, when the sprockets 19a, 19b, and 19c of the link device 10L rotate, a driving force acts on the plurality of link mechanisms 11 of the link device 10L, and these link mechanisms 11 move (run) on the rails 13 and 14.

In other words, the rails 13 and 14 in the link devices 10R and 10L are guide rails configured to move (run) the plurality of link mechanisms 11.

In the following description, for each of the link devices 10R and 10L shown in FIG. 3, the side facing the resin film 8 is referred to as a "film side", and the side opposite to the film side is referred to as a "return side" in some cases. Specifically, the side on which the plurality of link mechanisms 11 gripping the resin film 8 move from the inlet (IN) toward the outlet (OUT) is the film side. Meanwhile, the side which is located on the opposite side of the film side and on which the plurality of link mechanisms 11 which do not grip the resin film 8 move from the outlet (OUT) toward the inlet (IN) is the return side.

A pitch between adjacent link mechanisms 11 (referred to also as "link pitch" in some cases) changes in accordance with an interval (separation distance) between the rail 13 and the rail 14. In other words, the pitch between the adjacent link mechanisms 11 can be adjusted by adjusting the separation distance between the rail 13 and the rail 14.

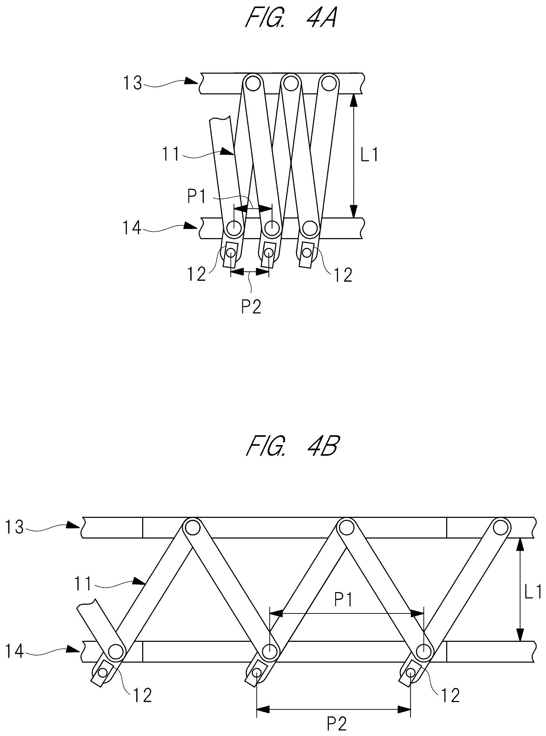

FIG. 4A and FIG. 4B are plan views schematically showing part of the link mechanisms 11 and the rails 13 and 14. As shown in FIG. 4A and FIG. 4B, the angle formed by the adjacent link mechanisms 11 becomes larger and the pitch P1 between the adjacent link mechanisms 11 becomes larger as the separation distance L1 between the rails 13 and 14 becomes smaller. On the other hand, the angle formed by the adjacent link mechanisms 11 becomes smaller and the pitch P1 between the adjacent link mechanisms 11 becomes smaller as the separation distance L1 between the rails 13 and 14 becomes larger.

As described above, each link mechanism 11 has the clip 12 configured to grip the resin film 8. Therefore, the pitch P2 between the adjacent clips 12 also increases and decreases in accordance with the increase and decrease of the pitch P1 between the adjacent link mechanisms 11. Specifically, the pitch P1 between the link mechanisms 11 increases when the separation distance L1 between the rails 13 and 14 decreases, and the pitch P2 between the clips 12 also increases when the pitch P1 between the link mechanisms 11 increases (FIG. 4A → FIG. 4B). On the other hand, the pitch P1 between the link mechanisms 11 decreases when the separation distance L1 between the rails 13 and 14 increases, and the pitch P2 between the clips 12 also decreases when the pitch P1 between the link mechanisms 11 decreases (FIG. 4B → FIG. 4A).

Note that each of the plurality of link mechanisms 11 includes the clip 12. Therefore, the pitch P1 between the two adjacent link mechanisms 11 and the pitch P2 between the two clips 12 provided in these link mechanisms 11 are the same. That is, P1=P2 holds in each of FIG. 4A and FIG. 4B.

### <Operation of Stretching Machine>

The resin film 8 supplied from the raw sheet cooling apparatus 4 to the stretching machine 5 shown in FIG. 1 is held by the link devices 10R and 10L at the inlet of the stretching machine 5. More specifically, the resin film 8 is gripped by the clips 12 in the link mechanisms 11 of the link devices 10R and 10L shown in FIG. 2 and FIG. 3. In other words, one side of the resin film 8 in the width direction is gripped by the clips 12 in the link mechanisms 11 constituting the link device 10R, and the other side of the resin film 8 in the width direction is gripped by the clips 12 in the link mechanisms 11 constituting the link device 10L.

The resin film 8 whose both sides in the width direction are gripped by the clips 12 is conveyed from the inlet to the outlet of the stretching machine 5 along with the movement of the link mechanisms 11, and passes through the preheating region 20A, the stretching region 20B, and the heat setting region 20C in this order. The resin film 8 is stretched in the MD direction and the TD direction while passing through the stretching region 20B. Thereafter, the stretched resin film 8 reaches the outlet through the heat setting region 20C and is released from the clips 12. The resin film 8 released from the clips 12 is conveyed to the take-off apparatus 6 and is further conveyed from the take-off apparatus 6 to the winder apparatus 7.

As shown in FIG. 3, in the preheating region 20A, the interval (separation distance in the TD direction) L2 between the rails 13 and 14 of the link device 10R and the rails 13 and 14 of the link device 10L is almost constant. Therefore, the width (dimension in the TD direction) of the resin film 8 does not change and remains constant in the preheating region 20A.

In the preheating region 20A, the interval (separation distance) L1 between the rail 13 and the rail 14 of the link device 10R on the film side is almost constant. Therefore, in the preheating region 20A, the pitch P1 between the link mechanisms 11 of the link device 10R on the film side is almost constant, and thus the pitch P2 between the clips 12 of the link device 10R on the film side is also almost constant. Further, in the preheating region 20A, the interval (separation distance) L1 between the rail 13 and the rail 14 of the link device 10L on the film side is almost constant. Therefore, in the preheating region 20A, the pitch P1 between the link mechanisms 11 of the link device 10L on the film side is almost constant, and thus the pitch P2 between the clips 12 of the link device 10L on the film side is also almost constant. Therefore, the length (dimension in the MD direction) of the resin film 8 does not change and remains constant in the preheating region 20A.

In other words, the resin film 8 is not stretched in either the TD direction or the MD direction in the preheating region 20A. From another perspective, neither the stretching process for the resin film 8 in the TD direction nor the stretching process for the resin film 8 in the MD direction is performed in the preheating region 20A.

In the stretching region 20B, the interval (separation distance in the TD direction) L2 between the rails 13 and 14 of the link device 10R and the rails 13 and 14 of the link device 10L gradually increases as advancing in the conveying direction (MD direction). Therefore, in the stretching region 20B, the resin film 8 is pulled and stretched in the TD direction as it advances in the conveying direction (MD direction). In other words, in the stretching region 20B, the width (dimension in the TD direction) of the resin film 8 gradually increases as it advances in the conveying direction (MD direction).

Also, in the stretching region 20B, the interval (separation distance) L1 between the rail 13 and the rail 14 of the link device 10R on the film side gradually decreases and the interval (separation distance) L1 between the rail 13 and the rail 14 of the link device 10L on the film side also gradually decreases as advancing in the conveying direction (MD direction) . Therefore, in the stretching region 20B, the pitch P1 between the link mechanisms 11 of the link device 10R on the film side gradually increases as advancing in the conveying direction (MD direction), and thus the pitch P2 between the clips 12 of the link device 10R on the film side also gradually increases. Further, in the stretching region 20B, the pitch P1 between the link mechanisms 11 of the link device 10L on the film side gradually increases as advancing in the conveying direction (MD direction), and thus the pitch P2 between the clips 12 of the link device 10L on the film side also gradually increases. As a result, in the stretching region 20B, the resin film 8 is pulled and stretched in the MD direction as it advances in the conveying direction (MD direction).

In other words, in the stretching region 20B, the resin film 8 is stretched in the TD direction and the MD direction. From another perspective, in the stretching region 20B, the stretching process in the TD direction and the stretching process in the MD direction are performed for the resin film 8.

In the heat setting region 20C, the interval (separation distance in the TD direction) L2 between the rails 13 and 14 of the link device 10R and the rails 13 and 14 of the link device 10L is almost constant.

Further, in the heat setting region 20C, the interval (separation distance) L1 between the rail 13 and the rail 14 of the link device 10R on the film side is almost constant. Therefore, in the heat setting region 20C, the pitch P1 between the link mechanisms 11 of the link device 10R on the film side is almost constant, and thus the pitch P2 between the clips 12 of the link device 10R on the film side is also almost constant. Similarly, in the heat setting region 20C, the interval (separation distance) L1 between the rail 13 and the rail 14 of the link device 10L on the film side is almost constant. Therefore, in the heat setting region 20C, the pitch P1 between the link mechanisms 11 of the link device 10L on the film side is also almost constant, and thus the pitch P2 between the clips 12 of the link device 10L on the film side is also almost constant.

Therefore, the resin film 8 is not stretched in either the TD direction or the MD direction in the heat setting region 20C. From another perspective, neither the stretching process for the resin film 8 in the TD direction nor the stretching process for the resin film 8 in the MD direction is performed in the heat setting region 20C.

### <Configuration of Link Mechanism>

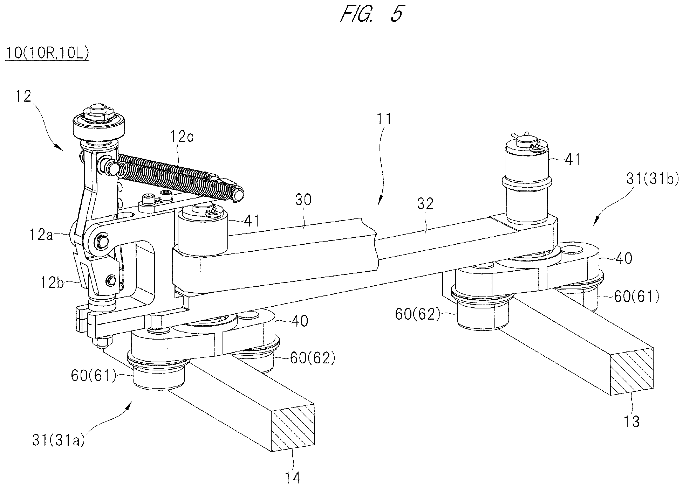

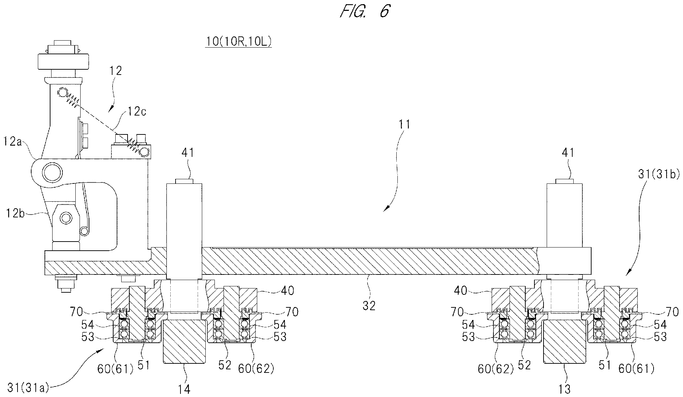

FIG. 5 is a perspective view showing one of the plurality of link mechanisms 11 constituting the link device 10. FIG. 6 is a cross-sectional view of the link mechanism 11 shown in FIG. 5.

The link mechanism 11 includes a link plate 30 in addition to the clip 12. Also, the link mechanism 11 includes a pair of rail holders 31. More specifically, the link mechanism 11 includes an outer rail holder 31a and an inner rail holder 31b. The outer rail holder 31a and the inner rail holder 31b are coupled via a base member 32 extending across them. Note that the illustration of the link plate 30 is omitted in FIG. 6.

The outer rail holder 31a is disposed on the rail 14 and moves (runs) along the rail 14. On the other hand, the inner rail holder 31b is disposed on the rail 13 and moves (runs) along the rail 13.

### <Rail Holder>

Each rail holder 31 includes a roller holding portion 40 and a shaft 41 provided at the center of the roller holding portion 40 in the longitudinal direction. The roller holding portion 40 of the outer rail holder 31a is disposed on the rail 14 so as to straddle the rail 14. As a result, one end of the roller holding portion 40 of the outer rail holder 31a in the longitudinal direction protrudes toward the outer side of the rail 14, and the other end of the roller holding portion 40 in the longitudinal direction protrudes toward the inner side of the rail 14 (side facing the rail 13).

On the other hand, the roller holding portion 40 of the inner rail holder 31b is disposed on the rail 13 so as to straddle the rail 13. As a result, one end of the roller holding portion 40 of the inner rail holder 31b in the longitudinal direction protrudes toward the outer side of the rail 13 (side facing the rail 14), and the other end of the roller holding portion 40 in the longitudinal direction protrudes toward the inner side of the rail 13.

The shaft 41 of the outer rail holder 31a penetrates one end sides (base end sides) of the link plate 30 and the base member 32 in the longitudinal direction. From another perspective, the base end sides of the link plate 30 and the base member 32 are rotatably coupled with each other by the shaft 41 of the outer rail holder 31a.

On the other hand, the shaft 41 of the inner rail holder 31b penetrates the other end side (tip end side) of the base member 32 in the longitudinal direction and protrudes from the base member 32. The shaft 41 of the inner rail holder 31b protruding from the base member 32 penetrates one end side (tip end side) of the link plate 30 of another adjacent link mechanism 11 in the longitudinal direction. From another perspective, the tip end side of the base member 32 of one link mechanism 11 and the tip end side of the link plate 30 of another adjacent link mechanism 11 are rotatably coupled with each other by the shaft 41 of the inner rail holder 31b.

In other words, the shaft 41 of the outer rail holder 31a is a rotating axis on the base end side of the link plate 30 and the base member 32. Also, the shaft 41 of the inner rail holder 31b is a rotating axis on tip end side of the link plate 30 and the base member 32.

### <Clip>

The clip 12 is provided at the base end of the base member 32 of each link mechanism 11. The clip 12 includes a main body portion 12a, a grip portion 12b, a spring portion 12c, and others. The main body portion 12a is fixed to the base end side of the base member 32. The grip portion 12b is attached to the main body portion 12a so as to be movable in an up-down direction. The spring portion 12c biases the grip portion 12b so as to operate the grip portion 12b downward. By making the grip portion 12b operate downward by the biasing force of the spring portion 12c, the resin film 8 is sandwiched between the main body portion 12a and the grip portion 12b. Specifically, the resin film 8 is gripped by the clip 12. On the other hand, by making the grip portion 12b operate upward against the biasing force of the spring portion 12c, the resin film 8 is released from the clip 12.

### <Roller Holding Portion>

The roller holding portion 40 of each rail holder 31 is rotatably attached to the lower end of the shaft 41 protruding downward from the base member 32. More specifically, each roller holding portion 40 is attached to the lower end of the shaft 41 via bearings.

As described above, the roller holding portion 40 of the outer rail holder 31a protrudes toward both sides of the rail 14 while straddling the rail 14. On the other hand, the roller holding portion 40 of the inner rail holder 31b protrudes toward both sides of the rail 13 while straddling the rail 13.

A shaft (roller shaft) 51 is provided on one side of the roller holding portion 40 of the outer rail holder 31a protruding toward the outer side of the rail 14. Also, another shaft (another roller shaft) 52 is provided on the other side of the roller holding portion 40 of the outer rail holder 31a protruding toward the inner side of the rail 14. One end side (upper end side) of each of the roller shafts 51 and 52 is fixed to the roller holding portion 40 of the outer rail holder 31a. More specifically, the upper end side of each of the roller shafts 51 and 52 is press-fitted into a mounting hole provided in the roller holding portion 40.

Similarly, a shaft (roller shaft) 51 is provided on one side of the roller holding portion 40 of the inner rail holder 31b protruding toward the outer side of the rail 13. Also, another shaft (another roller shaft) 52 is provided on the other side of the roller holding portion 40 of the inner rail holder 31b protruding toward the inner side of the rail 13. One end side (upper end side) of each of the roller shafts 51 and 52 is fixed to the roller holding portion 40 of the inner rail holder 31b. More specifically, the upper end side of each of the roller shafts 51 and 52 is press-fitted into a mounting hole provided in the roller holding portion 40.

### <Outline of Guide Roller>

The outer rail holder 31a is provided with a plurality of metal guide rollers that move along the rail 14, and the inner rail holder 31b is provided with a plurality of metal guide rollers that move along the rail 13.

More specifically, a pair of guide rollers 61 and 62 facing each other with the rail 14 interposed therebetween are rotatably provided below the roller holding portion 40 of the outer rail holder 31a. Similarly, a pair of guide rollers 61 and 62 facing each other with the rail 13 interposed therebetween are rotatably provided below the roller holding portion 40 of the inner rail holder 31b. In the following description, when there is no need to particularly distinguish between the guide rollers 61 and 62, they will be collectively referred to as "guide rollers 60".

The guide roller 61 provided in the outer rail holder 31a has one end side (upper end side) rotatably attached to the other end side (lower end side) of the roller shaft 51 fixed to the roller holding portion 40. The guide roller 62 provided in the outer rail holder 31a has one end side (upper end side) rotatably attached to the other end side (lower end side) of the roller shaft 52 fixed to the roller holding portion 40.

In other words, the two guide rollers 60 provided in the outer rail holder 31a are rotatably held by the roller holding portion 40. Then, these two guide rollers 60 move along the rail 14 while rotating and being in contact with the rail 14.

The guide roller 61 provided in the inner rail holder 31b has one end side (upper end side) rotatably attached to the other end side (lower end side) of the roller shaft 51 fixed to the roller holding portion 40. The guide roller 62 provided in the inner rail holder 31b has one end side (upper end side) rotatably attached to the other end side (lower end side) of the roller shaft 52 fixed to the roller holding portion 40.

In other words, the two guide rollers 60 provided in the inner rail holder 31b are rotatably held by the roller holding portion 40. Then, these two guide rollers 60 move along the rail 13 while rotating and being in contact with the rail 13.

### <Details of Guide Roller>

The guide rollers 60 each have the same shape, structure, dimension, and the like. Therefore, by describing the shape, structure, and the like of the guide rollers 60 (guide rollers 61 and 62) provided in the outer rail holder 31a in more detail, the shape, structure, and the like of the guide rollers 60 (guide rollers 61 and 62) provided in the inner rail holder 31b will also be clarified.

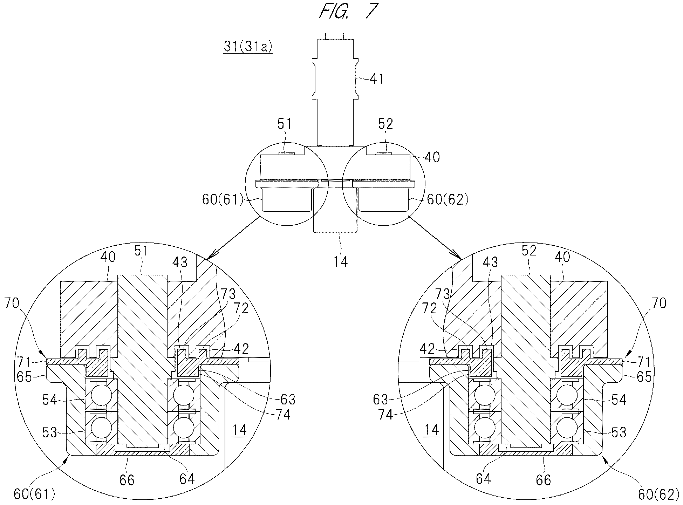

FIG. 7 is an enlarged cross-sectional view showing the guide rollers 60 provided in the outer rail holder 31a and a structure around the guide rollers 60.

The guide roller 60 has a cylindrical shape with openings at both ends in the axial direction. More specifically, an opening 63 is provided in the upper surface of the guide roller 60 facing the bottom surface of the roller holding portion 40. Also, an opening 64 is also provided on the lower surface of the guide roller 60. Further, a flange 65 is provided around the opening 63. That is, the guide roller 60 is a flanged roller having openings at both ends.

The lower end side of the roller shaft 51 is inserted into the guide roller 61 through the opening 63 of the guide roller 61. Similarly, the lower end side of the roller shaft 52 is inserted into the guide roller 62 through the opening 63 of the guide roller 62.

Further, the lower portion of the roller shaft 51 is inserted into bearings 53 and 54 housed in the guide roller 61, and the lower portion of the roller shaft 52 is inserted into bearings 53 and 54 housed in the guide roller 62. As a result, the guide roller 61 is rotatably supported with respect to the roller shaft 51, and the guide roller 62 is rotatably supported with respect to the roller shaft 52.

The bearings 53 and 54 are rolling bearings (ball bearings) each including an inner ring into which the lower portion of the roller shaft 51 or 52 is inserted, an outer ring surrounding the inner ring, and a plurality of rolling elements (balls) disposed between the inner ring and the outer ring.

A lubricant such as grease is filled in the gaps between the inner ring and the outer ring of the bearings 53 and 54. Also, the bearings 53 and 54 are each provided with an annular sealing member that covers the gap between the inner ring and the outer ring in which the lubricant is filled. Understandably, an outer edge of each sealing member is in contact with the outer rings of the bearings 53 and 54, but an inner edge thereof is not in contact with the inner rings of the bearings 53 and 54. That is, the bearings 53 and 54 are sealed bearings, more specifically, non-contact sealed bearings.

### <Cover Member>

As described above, the guide rollers 61 and 62 move while being in contact with the rails 13 and 14. Therefore, in order to suppress wear of the rails 13 and 14, an oil film is formed on the surfaces of the rails 13 and 14. Furthermore, the resin film 8 supplied to the stretching machine 5 contains oil in some cases. For example, the resin film used for a separator of a lithium-ion secondary battery contains a plasticizer (a nonvolatile solvent such as liquid paraffin or paraffin wax).

Therefore, there is a possibility that oil dripping from the surfaces of the rails 13 and 14 or oil seeping out from the resin film 8 is transmitted through various parts of the link mechanism 11 and reaches the guide rollers 61 and 62. For example, oil seeping out from the resin film 8 and adhering to the roller holding portion 40 may run along the surface of the roller holding portion 40, drip onto the guide roller 60, and enter the interior of the guide roller 60 from the opening 63.

According to the studies conducted by the inventors, oil that has entered the interior of the guide roller 60 is one of the factors that cause the leakage of lubricant sealed in the bearings 53 and 54. From another perspective, oil that has entered the interior of the guide roller 60 causes insufficient lubrication of the bearings 53 and 54, thereby becoming one of the factors that shorten the service life of the bearings 53 and 54.

For this reason, the link mechanism 11 according to this embodiment is provided with a cover member 70 configured to prevent oil from entering the interior of the guide roller 60. More specifically, two cover members 70 are provided on each rail holder 31.

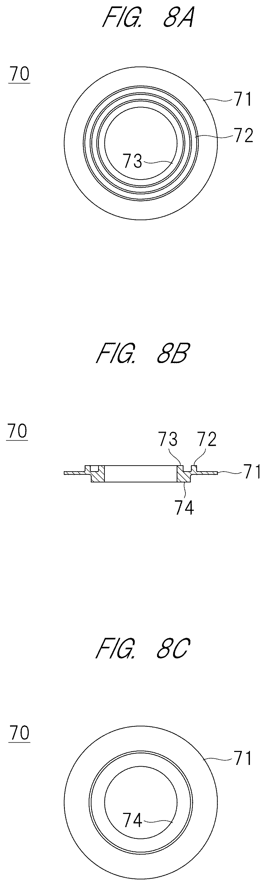

FIG. 8A is a plan view of the cover member 70, FIG. 8B is a cross-sectional view of the cover member 70, and FIG. 8C is a bottom view of the cover member 70.

Each cover member 70 includes an annular flange portion 71 and three annular protrusions 72, 73, and 74 formed on the radially inner side of the flange portion 71. The protrusion 72 has the largest outer diameter of the three protrusions and is formed on the upper surface of the cover member 70. The protrusion 73 has the smallest outer diameter of the three protrusions and is formed on the upper surface of the cover member 70 and on the inner side of the protrusion 72. The protrusion 74 has an outer diameter smaller than that of the protrusion 72 and larger than that of the protrusion 73 and is formed on the lower surface of the cover member 70.

In other words, two protrusions (protrusions 72 and 73) are formed on the upper surface of the cover member 70, and one protrusion (protrusion 74) is formed on the lower surface of the cover member 70. From another perspective, protrusions are formed on the upper surface of the cover member 70 in a double annular form.

In the following description, the protrusion 72 may be referred to as an "upper large-diameter protrusion 72" and the protrusion 73 may be referred to as an "upper small-diameter protrusion 73." Also, the protrusion 74 may be referred to as a "lower protrusion 74."

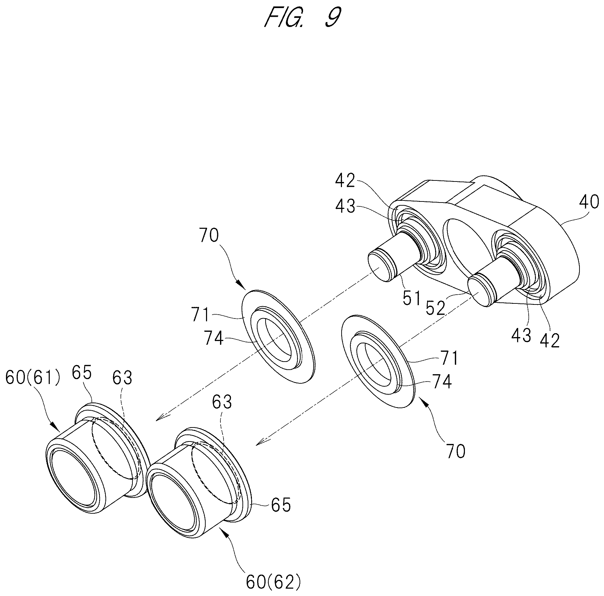

FIG. 9 is an exploded perspective view showing a mounted state of the cover member 70. The cover member 70 is disposed between the roller holding portion 40 and the guide roller 60, filling the gap therebetween and covering the opening 63 of the guide roller 60. Note that the lower end sides of the roller shafts 51 and 52 pass through the centers of the cover members 70 and enter the interiors of the guide rollers 61 and 62 through their openings 63.

More specifically, as shown in FIG. 7, the flange portion 71 of the cover member 70 is sandwiched between the bottom surface of the roller holding portion 40 and the upper surface of the guide roller 60. Furthermore, the upper large-diameter protrusion 72 of the cover member 70 enters a groove 42 formed on the bottom surface of the roller holding portion 40, and the upper small-diameter protrusion 73 is enters another groove 43 formed on the bottom surface of the roller holding portion 40. From another perspective, the upper large-diameter protrusion 72 is fitted into the groove 42, and the upper small-diameter protrusion 73 is fitted into the other groove 43.

Note that the grooves 42 and 43 are annular grooves with the same center and different diameters. In other words, the grooves 42 and 43 are formed along the circumferences of concentric circles with different diameters.

The lower protrusion 74 of the cover member 70 enters the opening 63 of the guide roller 60. More specifically, the lower protrusion 74 enters the annular region of the opening 63 (the region around the roller shafts 51 and 52). From another perspective, the lower protrusion 74 is fitted into the annular region of the opening 63.

As a result, the opening 63 of the guide roller 60 is covered and surrounded by the cover member 70. More specifically, the opening 63 is covered by the inner periphery of the cover member 70 including the upper small-diameter protrusion 73 and the lower protrusion 74, and is surrounded by the outer periphery of the cover member 70 including the flange portion 71 and the upper large-diameter protrusion 72. Note that, in the inner rail holder 31b as well (not shown in FIG. 7), the opening 63 of each guide roller 60 is covered and surrounded by the cover member 70.

Here, the upper large-diameter protrusion 72 and the upper small-diameter protrusion 73 enter the grooves 42 and 43 are annular protrusions that have the same center and different diameters. As a result, double annular walls are formed between the roller holding portion 40 and the guide roller 60. Therefore, even if oil enters the gap between the bottom surface of the roller holding portion 40 and the upper surface of the guide roller 60, the possibility that the oil reaches the opening 63 is extremely low.

For example, in order for the oil that runs along the side surface of the roller holding portion 40 shown in FIG. 7 and drips onto the flange portion 71 of the cover member 70 to reach the opening 63, the oil has to pass over the upper large-diameter protrusion 72, which is the outer annular wall, and then also pass over the upper small-diameter protrusion 73, which is the inner annular wall.

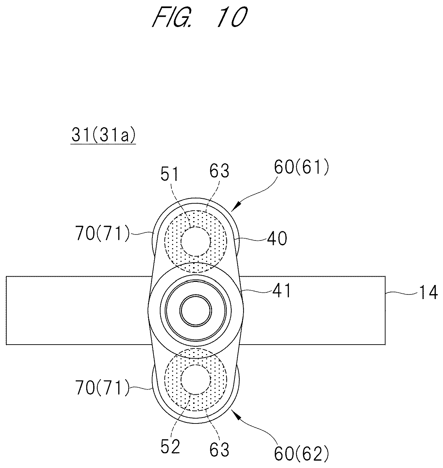

In addition, in this embodiment, both side portions of the roller holding portion 40 project around the openings 63 of the guide rollers 61 and 62. FIG. 10 is a plan view of the outer rail holder 31a shown in FIG. 7. The opening 63 of the guide roller 61 is entirely covered by one side portion of the roller holding portion 40 that projects around the opening 63, and the opening 63 of the guide roller 62 is entirely covered by the other side portion of the roller holding portion 40 that projects around the opening 63.

Therefore, the oil does not run along the side surface of the roller holding portion 40 and directly reach the opening 63 of the guide roller 60. In other words, the oil that runs along the side surface of the roller holding portion 40 drips onto the flange portion 71 of the cover member 70 without fail. However, as already described, the oil that drips onto the flange portion 71 is blocked by the double annular walls and cannot reach the opening 63.

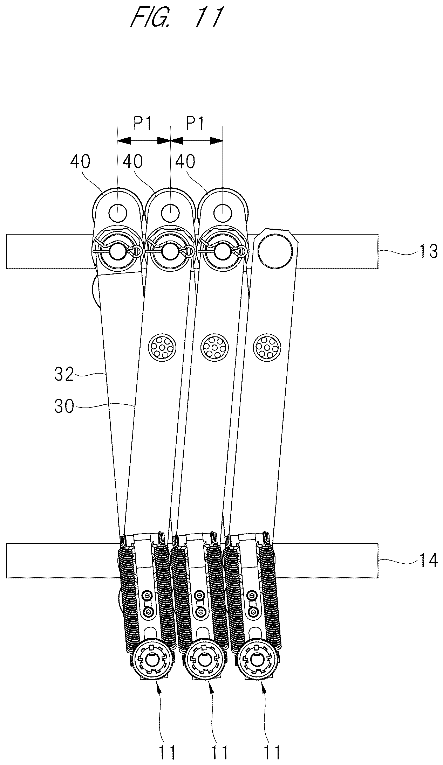

Understandably, both side portions of each roller holding portion 40 have a shape and size that do not interfere with each other even when the link pitch is at its minimum. FIG. 11 is a plan view showing the plurality of link mechanisms 11 when the pitch P1 between adjacent link mechanisms 11 is at its minimum. As shown, the roller holding portions 40 of the adjacent link mechanisms 11 do not come into contact with each other even when the pitch P1 is at its minimum.

In other words, each roller holding portion 40 has a shape and size that can cover the entire openings 63 of the guide rollers 61 and 62, and also has a shape and size that does not come into contact with adjacent roller holding portions 40 even when the pitch P1 is at its minimum.

In this embodiment, a cap 66 is attached to the opening 64 provided in the lower surface of the guide roller 60 (see FIG. 7). In other words, the opening 64 of the guide roller 60 is blocked by the cap 66. Therefore, oil does not enter the guide roller 60 through the opening 64, either.

In other words, in this embodiment, the opening 63 provided in the upper surface of the guide roller 60 is doubly blocked by the roller holding portion 40 and the cover member 70, and the opening 64 provided in the lower surface of the guide roller 60 is blocked by the cap 66. Note that the cap 66 is screwed to the inner peripheral surface of the opening 64.

### (Second Embodiment)

Next, a stretching machine according to another embodiment will be described. Understandably, the stretching machine according to this embodiment has the same basic configuration as the stretching machine 5 according to the first embodiment. Therefore, the description of the same or substantially the same configuration as that the stretching machine 5 according to the first embodiment will be omitted, and only the different configuration will be described. The stretching machine according to this embodiment also uses a link device including a plurality of link mechanisms. Furthermore, each link mechanism has the rail holder 31, the guide roller 60, and others, like the link mechanism 11 according to the first embodiment.

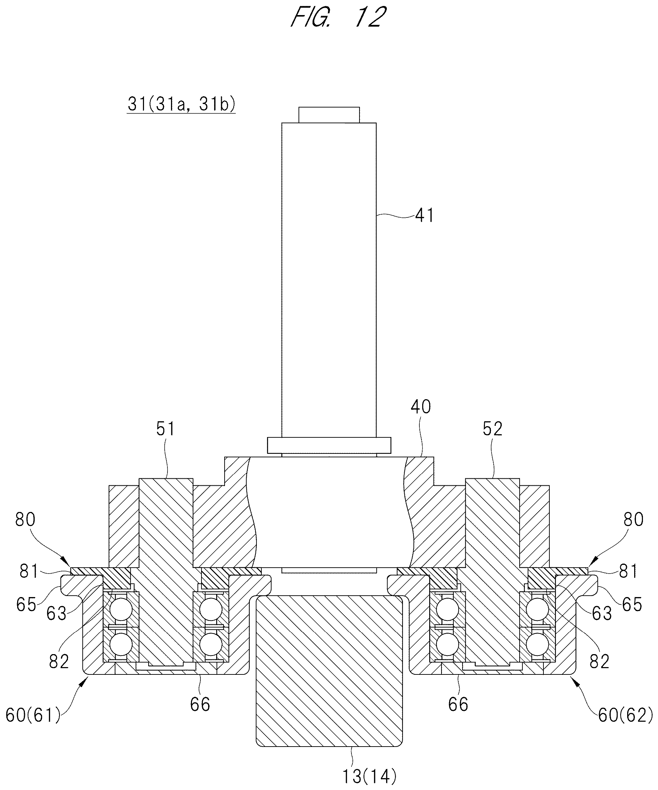

FIG. 12 is an enlarged cross-sectional view showing the guide rollers 60 provided in the rail holder 31 of the link mechanism and a structure around the guide rollers 60 according to this embodiment.

As shown in FIG. 12, a cover member 80 configured to cover the opening 63 of the guide roller 60 is provided between the roller holding portion 40 and the guide roller 60.

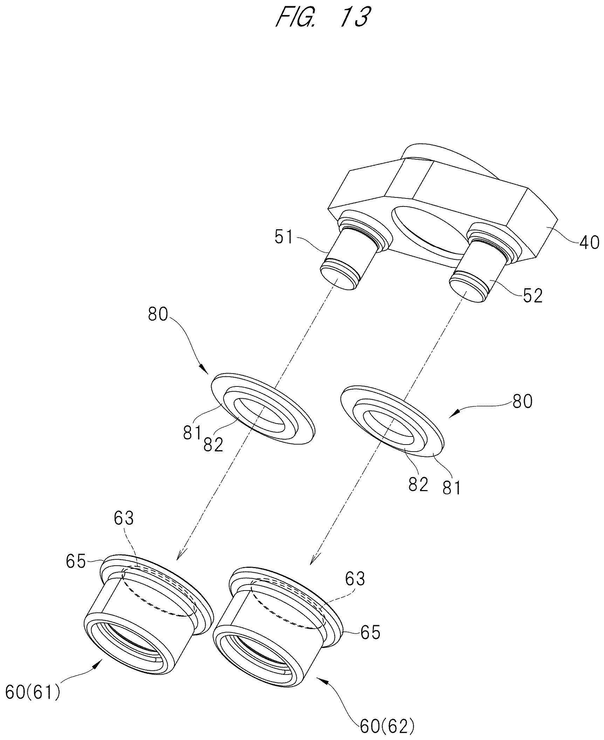

FIG. 13 is an exploded perspective view showing a mounted state of the cover members 80. One cover member 80 is disposed between one side portion of the roller holding portion 40 and the guide roller 61, thereby covering the opening 63 of the guide roller 61. The other cover member 80 is disposed between the other side portion of the roller holding portion 40 and the guide roller 62, thereby covering the opening 63 of the guide roller 62.

Each cover member 80 is provided with a flange portion 81 and a protrusion 82. The protrusion 82 is annular and is provided on the inner side of the flange portion 81. Also, the protrusion 82 protrudes downward from the inner edge of the flange portion 81.

One surface of the cover member 80 is in contact with the bottom surface of the roller holding portion 40, which faces the upper surface of the guide roller 60. Also, the other surface of the cover member 80 is in contact with the upper surface of the guide roller 60, which faces the bottom surface of the roller holding portion 40. More specifically, the lower surface of the flange portion 81 of the cover member 80 is in contact with the upper surface of the flange portion 65 of the guide roller 60. From another perspective, the lower surface of the flange portion 81 is in contact with the upper surface of the guide roller 60 around the opening 63.

Furthermore, the protrusion 82 of the cover member 80 enters the opening 63 of the guide roller 60. From another perspective, the protrusion 82 of the cover member 80 is fitted into the opening 63 of the guide roller 60.

As a result, the opening 63 of the guide roller 60 is surrounded and covered by the cover member 80. More specifically, the opening 63 is surrounded by the flange portion 81 of the cover member 80 and is blocked by the protrusion 82 of the cover member 80.

### (Third Embodiment)

Next, a stretching machine according to another embodiment will be described. Understandably, the stretching machine according to this embodiment has the same basic configuration as the stretching machine 5 according to the first embodiment. Therefore, the description of the same or substantially the same configuration as that the stretching machine 5 according to the first embodiment will be omitted, and only the different configuration will be described. The stretching machine according to this embodiment also uses a link device including a plurality of link mechanisms. Furthermore, each link mechanism has the rail holder 31, the guide roller 60, and others, like the link mechanism 11 according to the first embodiment.

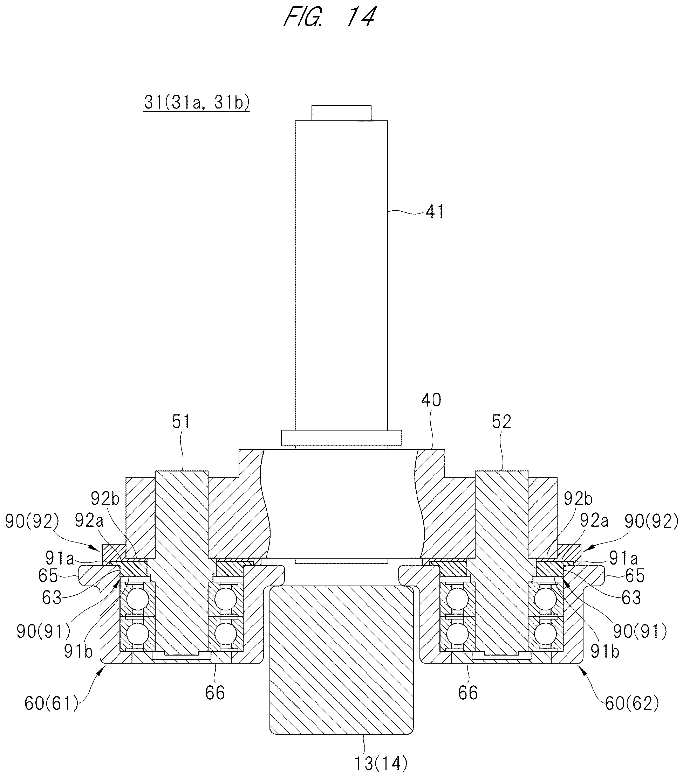

FIG. 14 is an enlarged cross-sectional view showing the guide rollers 60 provided in the rail holder 31 of the link mechanism and a structure around the guide rollers 60 according to this embodiment.

As shown in FIG. 14, a cover member 90 configured to cover the opening 63 of the guide roller 60 is provided between the roller holding portion 40 and the guide roller 60. Each cover member 90 is made up of a pair of cover member 91 and cover member 92.

The cover members 91 and 92 of each pair are stacked vertically. More specifically, the cover member 91 is stacked on the guide roller 60, and the cover member 92 is stacked on the cover member 91.

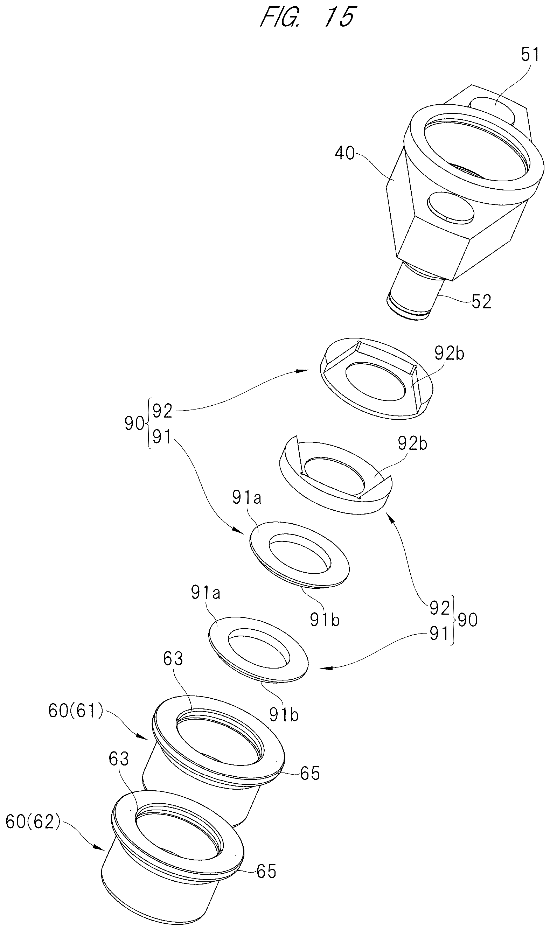

FIG. 15 is an exploded perspective view showing a mounted state of the cover members 90. One cover member 90 is disposed between one side portion of the roller holding portion 40 and the guide roller 61, thereby covering the opening 63 of the guide roller 61. The other cover member 90 is disposed between the other side portion of the roller holding portion 40 and the guide roller 62, thereby covering the opening 63 of the guide roller 62.

More specifically, each cover member 91 is disposed on the guide roller 60 to cover the opening 63. Each cover member 92 is disposed on the cover member 91 to cover the cover member 91 and fill the gap between the cover member 91 and the roller holding portion 40.

Each cover member 91 is provided with a flange portion 91a and a protrusion 91b. The protrusion 91b is annular and is provided on the inner side of the flange portion 91a. Also, the protrusion 91b protrudes downward from the inner edge of the flange portion 91a and enters the opening 63 of the guide roller 60.

One surface (lower surface) of each cover member 92 is provided with an annular recess 92a that houses at least a part of the cover member 91. In addition, the other surface (upper surface) of each cover member 92 is provided with a depression 92b.

The depression 92b has substantially the same shape as the side portion of the roller holding portion 40. One side portion of the roller holding portion 40 is fitted into the depression 92b of the cover member 90 (cover member 92) that covers the opening 63 of the guide roller 61. Also, the other side portion of the roller holding portion 40 is fitted into the depression 92b of the cover member 90 (cover member 92) that covers the opening 63 of the guide roller 62.

As a result, one surface (upper surface) of the cover member 90 is in contact with the bottom surface of the roller holding portion 40. More specifically, the bottom surface of the depression 92b of the cover member 92 is in contact with the bottom surface of the side portion of the roller holding portion 40.

In addition, the other surface (lower surface) of the cover member 90 is in contact with the upper surface of the guide roller 60. More specifically, at least the lower surface of the flange portion 91a of the cover member 91 is in contact with the upper surface of the flange 65 of the guide roller 60.

Note that, although the cover member 92 is fixed to the roller holding portion 40, the cover member 92 and the cover member 91 are not fixed to each other. Also, the cover member 91 whose protrusion 91b is fitted into the opening 63 rotates together with the guide roller 60.

### (Fourth Embodiment)

Next, a stretching machine according to another embodiment will be described. Understandably, the stretching machine according to this embodiment has the same basic configuration as the stretching machine 5 according to the first embodiment. Therefore, the description of the same or substantially the same configuration as that the stretching machine 5 according to the first embodiment will be omitted, and only the different configuration will be described. The stretching machine according to this embodiment also uses a link device including a plurality of link mechanisms. Furthermore, each link mechanism has the rail holder 31, the guide roller 60, and others, like the link mechanism 11 according to the first embodiment.

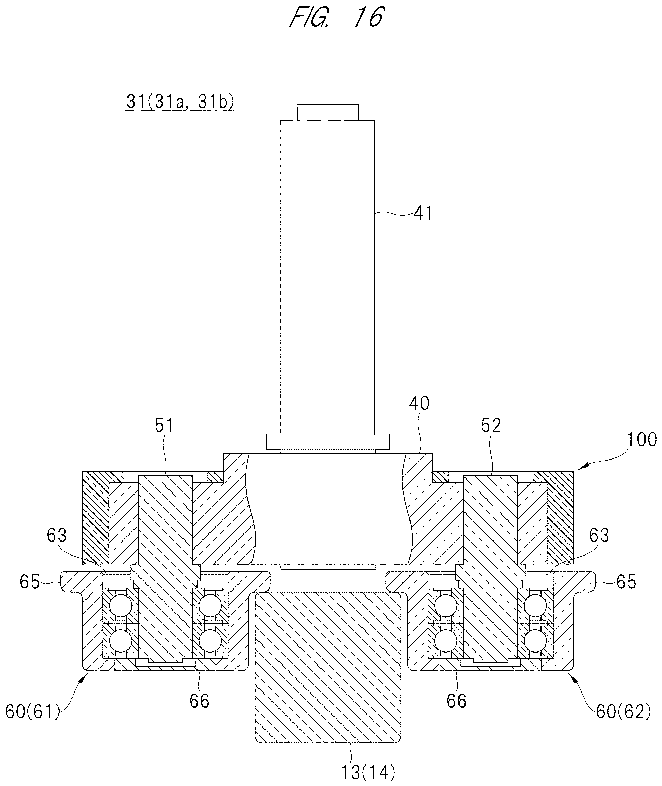

FIG. 16 is an enlarged cross-sectional view showing the guide rollers 60 provided in the rail holder 31 of the link mechanism and a structure around the guide rollers 60 according to this embodiment. In this embodiment, a cover member 100 is attached to the roller holding portion 40.

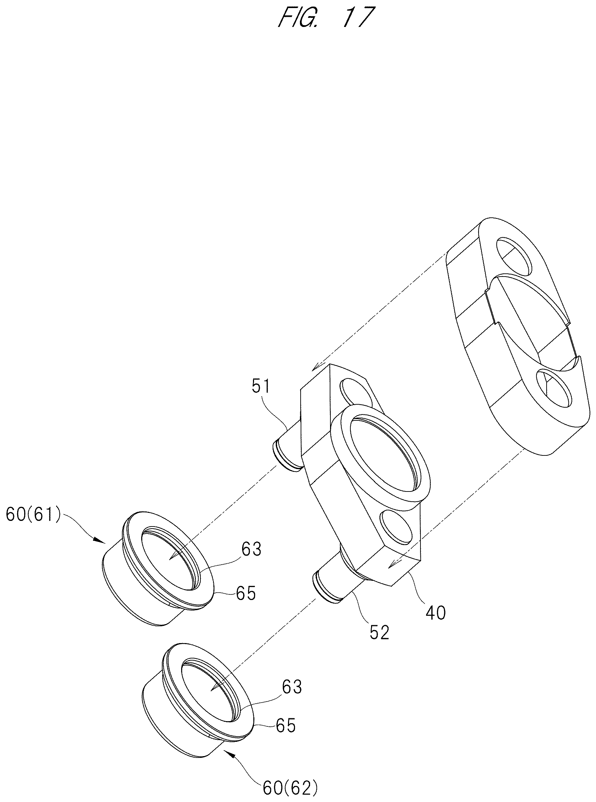

FIG. 17 is an exploded perspective view showing a mounted state of the cover member 100. The cover member 100 is placed over the roller holding portion 40, thereby covering the entire roller holding portion 40 as a whole. Here, the outer shape of the cover member 100 is the same or approximately the same as the outer shape of the roller holding portion 40 according to the first embodiment (see FIG. 9). In other words, the roller holding portion 40 of this embodiment to which the cover member 100 is attached has substantially the same shape as the roller holding portion 40 of the first embodiment.

As described above, the roller holding portion 40 of the first embodiment has a shape that can cover the entire opening 63 of the guide roller 60. Therefore, the roller holding portion 40 of this embodiment to which the cover member 100 is attached can also cover the entire opening 63 of the guide roller 60.

Understandably, in this embodiment, a part of the opening 63 of the guide roller 60 is covered by the side portion of the roller holding portion 40, and the remaining part of the opening 63 of the guide roller 60 is covered by the side portion of the cover member 100. In other words, in this embodiment, the roller holding portion 40 and the cover member 100 cover the entire opening 63 in cooperation with each other.

Note that openings to avoid the shaft 41 and the roller shafts 51 and 52 are formed in the cover member 100. Also, the cover member 100 may be divided into two cover members that cover both side portions of the roller holding portion 40. Further, the cover member 100 may or may not be fixed to the roller holding portion 40. However, if the cover member 100 is divided into two members, it is preferable that the respective cover members are detachably fixed to the roller holding portion 40.

In all the embodiments described so far, the opening 63 of the guide roller 60 is covered in its entirety. Therefore, the entry of oil into the guide roller 60 is reliably prevented or suppressed. As a result, insufficient lubrication of the bearings 53 and 54 is avoided, and the service life of the bearings 53 and 54 is extended. Furthermore, the extended service life of the bearings 53 and 54 leads to extending the maintenance intervals and reducing the maintenance frequency for the link mechanism 11, the link device 10, and the stretching machine 5.

In the foregoing, the invention made by the inventors of this application has been specifically described based on the embodiments and examples. However, it is needless to say that the present invention is not limited to the embodiments or examples described above and various modifications can be made within the range not departing from the gist of the present invention.

The roller holding portion and the cover member of each of the embodiments described above can be combined as appropriate. The material of the cover member is not particularly limited, but it is preferably formed of rubber or resin.

### REFERENCE SIGNS LIST

1: thin-film manufacturing system
2: extrusion apparatus
3: T-die
4: raw sheet cooling apparatus
5: stretching machine
6: take-off apparatus
7: winder apparatus
8: resin film
9: heat treatment unit
10, 10R, 10L: link device
11: link mechanism
12: clip
12a: main body portion
12b: grip portion
12c: spring portion
13, 14: rail
19a, 19b, 19c: sprocket
20A: preheating region
20B: stretching region
20C: heat setting region
30: link plate
31: roller holder
31a: outer rail holder
31b: inner rail holder
32: base member
40: roller holding portion
41: shaft
42, 43: groove
51, 52: shaft (roller shaft)
53, 54: bearing
60, 61, 62: guide roller
63, 64: opening
65: flange
66: cap
70, 80, 90, 91, 92, 100: cover member
71: flange portion
72: protrusion (upper large-diameter protrusion)
73: protrusion (upper small-diameter protrusion)
74: protrusion (lower protrusion)
81: flange portion
82: protrusion
91a: flange portion
91b: protrusion
92a: recess
92b: depression
L1, L2: separation distance
P1, P2: pitch

## Claims

1. A link mechanism used in a stretching machine configured to stretch a resin film, the link mechanism comprising:
a pair of rail holders;
a base member extending across the pair of rail holders; and
a clip provided at one end of the base member and configured to grip the resin film,
wherein each of the rail holders includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening; and
a bearing provided inside the guide roller and configured to rotatably support the guide roller with respect to the shaft, and
wherein the opening of the guide roller is entirely covered by the roller holding portion.

2. A link mechanism used in a stretching machine configured to stretch a resin film, the link mechanism comprising:
a pair of rail holders;
a base member extending across the pair of rail holders; and
a clip provided at one end of the base member and configured to grip the resin film,
wherein each of the rail holders includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member disposed between the roller holding portion and the guide roller and configured to cover the opening,
wherein an annular first protrusion configured to enter a groove formed on the roller holding portion is formed on one surface of the cover member facing the roller holding portion, and
wherein an annular second protrusion configured to enter the opening of the guide roller is formed on another surface of the cover member facing the guide roller.

3. The link mechanism according to claim 2,
wherein the groove formed on the roller holding portion includes two grooves having the same center and different diameters, and
wherein the first protrusion formed on the cover member includes a large-diameter protrusion configured to enter one of the grooves and a small-diameter protrusion configured to enter the other of the grooves.

4. A link mechanism used in a stretching machine configured to stretch a resin film, the link mechanism comprising:
a pair of rail holders;
a base member extending across the pair of rail holders; and
a clip provided at one end of the base member and configured to grip the resin film,
wherein each of the rail holders includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member disposed between the roller holding portion and the guide roller and configured to cover the opening,
wherein one surface of the cover member is in contact with a bottom surface of the roller holding portion facing the upper surface of the guide roller, and
wherein another surface of the cover member opposite to the one surface is in contact with the upper surface of the guide roller around the opening.

5. A link mechanism used in a stretching machine configured to stretch a resin film, the link mechanism comprising:
a pair of rail holders;
a base member extending across the pair of rail holders; and
a clip provided at one end of the base member and configured to grip the resin film,
wherein each of the rail holders includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member disposed between the roller holding portion and the guide roller and configured to cover the opening, and
wherein the cover member includes a first cover member stacked on the guide roller and a second cover member stacked on the first cover member.

6. The link mechanism according to claim 5,
wherein an annular protrusion configured to enter the opening of the guide roller is formed on the first cover member, and
wherein an annular recess configured to house at least a part of the first cover member is formed on the second cover member.

7. A link mechanism used in a stretching machine configured to stretch a resin film, the link mechanism comprising:
a pair of rail holders;
a base member extending across the pair of rail holders; and
a clip provided at one end of the base member and configured to grip the resin film,
wherein each of the rail holders includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member attached to the roller holding portion and configured to cover the opening, and
wherein a part of the opening of the guide roller is covered by the roller holding portion, and a remaining part of the opening of the guide roller is covered by the cover member.

8. A stretching machine configured to stretch a resin film, the stretching machine comprising a plurality of link mechanisms each having a pair of rail holders, a base member extending across the pair of rail holders, and a clip provided at one end of the base member and configured to grip the resin film,
wherein the rail holder of each of the link mechanisms includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening; and
a bearing provided inside the guide roller and configured to rotatably support the guide roller with respect to the shaft, and
wherein the opening of the guide roller is entirely covered by the roller holding portion.

9. A stretching machine configured to stretch a resin film, the stretching machine comprising a plurality of link mechanisms each having a pair of rail holders, a base member extending across the pair of rail holders, and a clip provided at one end of the base member and configured to grip the resin film,
wherein the rail holder of each of the link mechanisms includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member disposed between the roller holding portion and the guide roller and configured to cover the opening,
wherein an annular first protrusion configured to enter a groove formed on the roller holding portion is formed on one surface of the cover member facing the roller holding portion, and
wherein an annular second protrusion configured to enter the opening of the guide roller is formed on another surface of the cover member facing the guide roller.

10. A stretching machine configured to stretch a resin film, the stretching machine comprising a plurality of link mechanisms each having a pair of rail holders, a base member extending across the pair of rail holders, and a clip provided at one end of the base member and configured to grip the resin film,
wherein the rail holder of each of the link mechanisms includes:
a roller holding portion;
a guide roller provided with an opening in an upper surface facing the roller holding portion and configured to move along a rail while rotating;
a shaft having one end side fixed to the roller holding portion and the other end side inserted into the guide roller through the opening;
a bearing provided inside the guide roller and configured to rotatably support the guide roller with respect to the shaft; and
a cover member attached to the roller holding portion and configured to cover the opening, and
wherein a part of the opening of the guide roller is covered by the roller holding portion, and a remaining part of the opening of the guide roller is covered by the cover member.
